# EUROPEAN PATENT SPECIFICATION

(11) **EP 2 603 301 B1**
(45) Date of publication and mention of the grant of the patent: **25.02.2015**
(21) Application number: 10749494.0
(22) Date of filing: 09.08.2010
(51) Int. Cl.: B65H 81/08, B01D 39/16

(54) **CARTRIDGE FILTER**
PATRONENFILTER
FILTRE DE TYPE CARTOUCHE

(43) Date of publication of application: 19.06.2013
(73) Proprietor: Kristiansen, Jan Ingolf, Purewell Christchurch Dorset BH23 3DU (GB)
(72) Inventor: Kristiansen, Jan Ingolf, Purewell Christchurch Dorset BH23 3DU (GB)
(74) Representative: Budde Schou A/S
(86) International application number: PCT/IB2010/053591
(87) International publication number: WO 2012/020280

(56) References cited:
- WO-A1-2007/015643
- US-A- 4 752 396
- US-A1- 2008 073 299

## Description

The present invention pertains to a tubular filter for filtering fluids and a method of manufacturing said filter and a method of filtering of fluids.

### BACKGROUND OF THE INVENTION

Traditionally, existing fluid filters that are adapted for filtering particles from fluids, are surface filters in the sense that the filtering occurs at just the outer surface of the element where the fluid first enters the element. With very fine surface filter elements, particles tend to accumulate at the outer surface, thereby loading the filter element and cutting off the flow of fluid through it. As a result, filtering is degraded and the element must be changed more frequently than desired. This has been a particular problem with high viscosity fluids such as oil, engine oil in particular. In order to alleviate this surface build-up problem so called string/yarn wound filters wherein a yarn is wound on a tubular bobbin have been developed. These filters have the advantage, that the fluid is filtered all the way along the thickness of the wound yarn. Examples of such yarn wound filters are known from EP 0489157, US 5,552,065, US 4,761,231, US 5,772,952, FR 2097502 and WO 2007/015643.

### SUMMARY OF THE INVENTION

It is an object to provide an alternative yarn wound filter that is particularly advantageous for filtering particles from a petrochemical fluid such as oil.

According to the present invention, the above-mentioned and other objects are fulfilled by a first aspect of the invention pertaining to a filter comprising a tubular core with a plurality of apertures and a hollow interior, said core having an open end for fluid communication with the hollow interior, a length of yarn wound in a series of at least three layers around an outer surface of the core, wherein the first layer closest to the surface of the core comprises at least 5 windings of the yarn, the second layer comprises at least 6 windings of the yarn and the third layer comprises at least 10 windings of the yarn and wherein two consecutive layers have been wound in accordance with different winding patterns.

Investigations performed by the applicant has shown that this particular way of building up the filter in a layered structure of yarn that wound onto the tubular core in accordance with winding patterns that are different for two consecutive layers and wherein the layers are built up with the minimum number of windings in the first, second, and third layer as stated above, is particularly effective filtering petrochemical fluids, especially oil, for particles having a diameter or average particle size in the range from 0.5 µm to 50 µm, without having using excessive pressure, but merely by letting the fluid flow freely through the filter at a pressure that is usually used in engines, power transmissions, such as hydraulics, gears, valves etc.

The tubular core is preferably cylindrical in its shape, and it is preferably made form plastic or metal. In one embodiment the tubular core with the yarn wound onto it is adapted to be bent into a curved shape along its longitudinal axis. Thus, facilitating a filter that can be bent around a corner, or other structure that is not compatible with a strictly cylindrical shape.

In one embodiment according to the invention each of the three layers have been wound in accordance with a winding pattern that is different from the winding pattern of the other layers. Hereby is achieved a filter wherein each layer mainly filters particles from the fluid up to a certain size. Thus, allowing a more effective utilization of the total volume of the filter for the filtering purpose.

The first layer comprises preferably less than 20 windings of the yarn. In one embodiment the second layer comprises less than 25 windings of the yarn. In another embodiment the third layer comprises less than 35 windings of the yarn.

In a preferred embodiment the first layer comprises between 7 and 14 windings of the yarn. In another preferred embodiment the second layer comprises between 8 and 14 windings of the yarn, and in yet another preferred embodiment the third layer comprises between 14 and 24 windings of the yarn.

In order to facilitate a good flow of the fluid through the filter without applying excessive pressure, each of the three layers comprises, preferably, less than 50 - 70 windings of yarn.

One way of providing a particular winding pattern is by using a particular winding angle, and the applicant has found it advantageous if the first layer of yarn has been wound around the outer surface of the core at an angle larger than 60 degrees with respect to an axis parallel to the tubular core. In another advantageous embodiment of the invention the second layer of yarn has been wound around the outer surface of the core at an angle larger than 55 degrees with respect to an axis parallel to the tubular core, and in yet another embodiment the third layer of yarn has been wound around the outer surface of the core at an angle larger than 50 degrees with respect to an axis parallel to the tubular core. Preferably, the angle with which the yarn has been wound around the core is different for two consecutive layers, in order to facilitate winding patterns that are able to trap particles of different sizes.

Preferably, the yarn comprises a mix of natural and synthetic fibers Since natural fibers are hydrophilic, while synthetic fibers generally are hydrophobic, a filter wherein the yarn is made of a mix of both natural and synthetic fibers has the additional advantage that in addition to being able to filter particles from the fluid, also water may be absorbed by the yarn and thereby filtered from the fluid without having to heat the filter.

In a preferred embodiment the natural fibers are chosen from a list of fibers comprising cotton and/or wool and the synthetic fibers are chosen from a list of fibers comprising any of the following materials: acryl, polyester, flax, polyamide, acetate and/or viscose. Cotton and wool are cheap natural fibers that are easy to mix with any or a plurality of the synthetic fibers mentioned above. Thus facilitating an effective, yet cheap yarn that for the filter.

In one embodiment according to the invention the yarn comprises less than 40% natural fibers. In another embodiment the yarn comprises more than 17% acryl. In yet another embodiment the yarn comprises more than 12% polyester, and in yet even another embodiment the yarn comprises more than 12% flax.

Preferably, the yarn comprises less than 2% polyamide or between 3% and 15% polyamide or between 5% and 9% polyamide.

Alternatively, or in addition to the above, the yarn may comprise more than 1 % acetate or between 1% and 10% acetate, or between 1 % and 6% acetate or between 2% and 4% acetate or between 1% and 2,5% acetate.

In an alternative embodiment the yarn comprises more than 1% viscose, or between 1% and 10% viscose or between 1% and 5% viscose or between 1% and 3% viscose. In a preferred embodiment according to any of the aspects of the invention the yarn has been wound around the outer surface of the core with different winding resistance in at least two of the three layers. Hereby is provided a simple way to vary the density of the yarn in the different layers. This influences the flow of the fluid through the layer and therefore the way the particles are deposited in the different layers. In a particularly preferred embodiment of any of the aspects of the invention the yarn of the first and third layer has been wound around the outer surface of the core with a winding resistance that is larger than the winding resistance that has been used for the second layer. Hereby the fluid under a certain pressure will meet first a harder resistance then a lesser resistance and then again a harder resistance when passing through the flow media. This also has the effect of first slowing down, then accelerating and then slowing down again of the fluid when passing through the filtration media (layers of yarn). By a suitable adjustment of the winding resistance the filter may be designed to be particularly effective in filtering particles of a particular size from the fluid, which means that it can be optimized for a particular use, wherein particles of a certain size are a problem.

In another preferred embodiment of any of the aspects of the invention, the yarn of the first layer (closest to the core) has been wound around the outer surface of the core with a winding resistance that is larger than the winding resistance that has been used for the second layer, and wherein the yarn of the third layer has been wound around the outer surface of the core with a winding resistance that is larger than the winding resistance that has been used for the second layer. Hereby is achieved an embodiment wherein the fluid is slowed down more and more for each layer it passes through during its flow through the filtering media (the layers of yarn).

According to a preferred embodiment of any of the aspects of the invention the outer surface of the tubular core is covered with a fluid permeable sheet that covers the core at least one time, the sheet being placed between the outer surface of the core and the first layer of yarn. The sheet is preferably a piece of textile, preferably a tightly woven textile.

According to an embodiment of any of the aspects of the invention, the filter may further comprise a housing that completely encloses the tubular core and yarn. The housing further comprises a first opening that is fluidly connected to the hollow interior of the tubular core, and a second opening that is fluidly connected to the layers of yarn. Preferably the second opening functions as a fluid inlet, and the first opening functions as a fluid outlet. Hereby is achieved a self contained unit that that may be adapted to be mounted in connection with a power transmission system, such as an engine, hydraulics, gears, valves etc. Furthermore, this self contained unit may be used as a bypass filter for providing additional filtering in already existing installations and power transmission systems. The housing is preferably made from metal.

In order to facilitate easy exchange of the filter, e.g. when it is worn out, without having to change the whole housing as well, the housing may comprise a container and a cap that is releasably attached to the container.

In one embodiment of any of the aspects of the invention the first opening is placed in the cap and the second opening is placed in the container, and in another embodiment the second opening is placed in the cap and the first opening is placed in the container..

However, in a preferred embodiment of any of the aspects of the invention both the first and the second openings are placed in the cap. Hereby is achieved an embodiment wherein the filter may be replaced in an easy manner without having to unplug one or both if the first and second openings of the housing. The container may for example just be screwed of the cap and the filter replaced. Alternatively, both the first and second opening is placed in the container.

According to an embodiment of any aspects of the invention the longitudinal extension of the yarn covered core is between 5 - 10 times the total radial thickness of the layers as measured from the outer surface of the tubular core. The dimensions that are chosen in any particular case may be chosen in dependence of the capacity needed, i.e. how much fluid is needed to be filtered pr. hour. For example a filter according to any aspects of the invention having a longitudinal extension between 24 cm and 30 cm will be suitable for filtering up to 250 - 500 l/h (liters/hour), while a filter that has a longitudinal extension between 45 cm and 60 cm will be suitable for filtering up to 1000 - 1500 l/h.

A method of manufacturing a filter is provided, where the method comprising the steps of
- mounting a tubular core with a plurality of apertures and a hollow interior, said core having an open end for fluid communication with the hollow interior, in a winding machine,
- rotating the core at a rate controlled by the winding machine. This could for example be done manually or at a pre-programmed rate,
- feeding a yarn to the core through a head in such a way that it winds onto an outer surface of the core,
- moving the head forward and backwards along the longitudinal axis of the core,
- winding a first layer of yarn onto the core comprising at least 5 windings of yarn, a second layer comprising at least 6 windings of the yarn and a third layer comprising at least 10 windings of yarn, by varying the speed of rotation of the core and/or speed of movement of the head between each layer.

The method may further comprise the step of winding each of the three layers in accordance with pre-programmed winding patterns different from the winding patterns of the other layers.

In one embodiment the method may further comprise the step of winding less than 20 windings of the yarn in the first layer. In another embodiment the method according to the third aspect of the invention may further comprise the step of winding less than 25 windings of the yarn in the second layer. In yet another embodiment the method may further comprise the step of winding less than 35 windings of the yarn in the third layer.

In a preferred embodiment the method may further comprise the step of winding between 7 and 14 windings of the yarn in the first layer. In another preferred embodiment the method according to the third aspect of the invention may further comprise the step of winding between 8 and 14 windings of the yarn in the second layer. In yet another preferred embodiment the method according to the third aspect of the invention may further comprise the step of winding between 14 and 24 windings of the yarn of the third layer. Preferably, the method according to the third aspect of the invention may comprise the step winding less than 50 - 70 windings of yarn in each of the three layers.

In one embodiment the method may further comprise the step of winding the first layer of yarn around the outer surface of the core at an angle larger than 60 degrees with respect to an axis parallel to the tubular core. In another embodiment the method may further comprise the step of winding the second layer of yarn around the outer surface of the core at an angle larger than 55 degrees with respect to an axis parallel to the tubular core. In yet another embodiment the method may further comprise the step of winding the third layer of yarn around the outer surface of the core at an angle larger than 50 degrees with respect to an axis parallel to the tubular core.

According to one embodiment of the method the yarn may comprise a mix of natural and synthetic fibers. Preferably, the natural fibers are chosen from a list of fibers comprising cotton and/or wool or flax and wherein the synthetic fibers are chosen from a list of fibers comprising any of the following materials: acryl, polyester, polyamide, acetate and/or viscose.

According to a particular embodiment of the method the yarn comprises less than 40% natural fibers. In one embodiment of the second aspect of the invention the yarn comprises more than 17% acryl. In another embodiment the yarn comprises more than 12% polyester, and in yet another embodiment the yarn comprises more than 12% flax.

Preferably, the yarn used in the method comprises less than 2% polyamide or between 3% and 15% polyamide or between 5% and 9% polyamide.

Alternatively, or in addition to the above, the yarn used in the method may comprise more than 1% acetate or between 1% and 10% acetate, or between 1 % and 6% acetate or between 2% and 4% acetate or between 1% and 2,5% acetate.

In an alternative embodiment of the method the yarn may comprise more than 1% viscose, or between 1% and 10% viscose or between 1% and 5% viscose or between 1 % and 3% viscose.

In a preferred embodiment of the yarn used in the method, the natural fibers are made of cotton or wool or a mix or cotton and wool.

The method may further comprising the step of varying the winding resistance of the yarn by varying the speed at which the yarn is feed through the head relative to the speed of rotation of the tubular core.

The step of winding the yarn around the outer surface of the core may in a preferred embodiment of the method be done with different winding resistance in at least two of the three layers.

Preferably, the step of winding the yarn of the first and third layer around the outer surface of the core is performed with a winding resistance that is larger than the winding resistance that has been used for the second layer.

In a preferred embodiment, the method may further comprise the step of winding the yarn of the first layer around the outer surface of the core with a winding resistance that is larger than the winding resistance that is used for the second layer, and winding the yarn of the second layer around the outer surface of the core with a winding resistance that is larger than the winding resistance that is used for the third layer.

In another preferred embodiment, the method may comprise the step of covering at least in part the outer surface of the tubular core with a fluid permeable sheet, prior to the step of winding the yarn onto the core.

A second aspect of the invention pertains to a method of filtering a fluid comprising the steps of:
- leading the fluid through a filter comprising at least three layers of yarn that are wound around an outer surface of a tubular core into an hollow interior of the core, wherein the first layer closest to the surface of the core comprises at least 5 windings of the yarn, the second layer comprises at least 6 windings of the yarn and the third layer comprises at least 10 windings of the yarn and wherein at least two of the at least three layers have been wound in accordance with different winding patterns.

In a preferred embodiment of the second aspect of the invention, the method may utilize a filter according to an embodiment of any of the other aspects of the invention.

### BREIF DESCRIPTION OF THE DRAWINGS

A further understanding of the nature and advantages of the present invention may be realized by reference to the remaining portions of the specification and the drawings. In the following, preferred embodiments of the invention is explained in more detail with reference to the drawings, wherein
- Fig. 1: shows a tubular core with a plurality of apertures,
- Fig. 2: shows an embodiment of a filter according to an aspect of the invention,
- Fig. 3: shows a cross section of an embodiment of a filter according to an aspect of the invention,
- Fig. 4: shows a cross section of a filter according to an aspect of the invention installed in a housing,
- Fig. 5: shows a partial longitudinal cross sectional view of an embodiment of a filter according to an aspect of the invention,
- Fig. 6: shows another cross sectional view of an embodiment of a filter according to an aspect of the invention,
- Fig. 7: shows a tubular core that has been placed in a winding machine, and
- Fig. 8: shows an embodiment of a method of manufacturing a filter according to an aspect of the invention.

### DETAILED DESCRIPTION

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

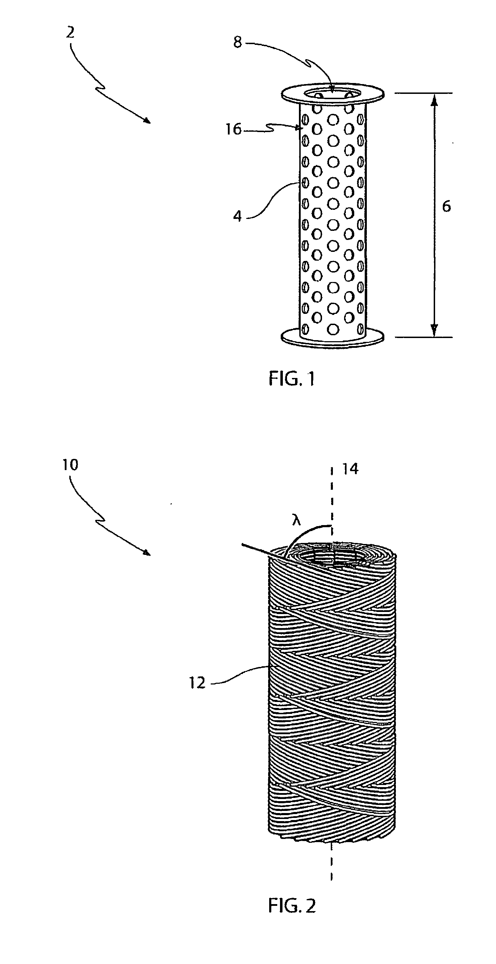

Fig. 1 shows a tubular core 2 with a plurality of apertures 4, a hollow interior 8 and a longitudinal extension indicated by the double arrow 6. The tubular core 2 has an outer surface 16 onto which a yarn may be wound. The illustrated core 2 has a generally cylindrical shape. However, other shapes could also be envisioned.
Fig. 2 shows an embodiment of a filter 10 according to an aspect of the invention. The illustrated filter 10 comprises a tubular core 2 (not visible) as illustrated in Fig. 1 onto which a yarn 12 has been wound. The outermost layer of yarn 12 has been wound onto the tubular core 2 at an angle λ with respect to an axis 14 that is parallel with the longitudinal extension of the tubular core 2. In the illustrated case the axis 14 is the symmetry axis of the tubular core 2.

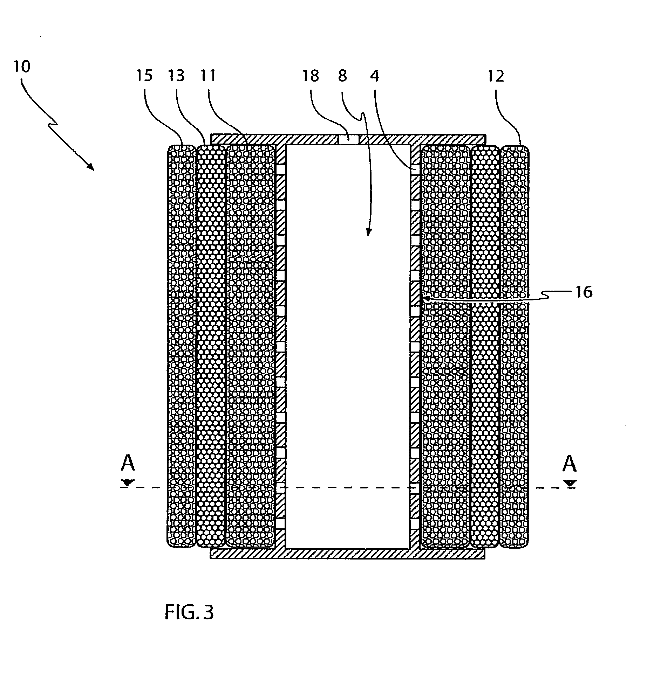

Fig. 3 shows a cross section of an embodiment of a filter 10 according to an aspect of the invention. The illustrated filter 10 comprises a tubular core 2 with a plurality of apertures 4 and a hollow interior 8. The tubular core 2 has an open end 18 for fluid communication with the hollow interior 8. A length of yarn 12 has been wound around the outer surface 16 of the tubular core 2 in a series of three layers, 11, 13, and 15, wherein the first layer 11 closest to the outer surface 16 of the tubular core 2 comprises at least 5 windings of the yarn 12. The second layer 13 comprises at least 6 windings of the yarn 12 and the third layer 15 comprises at least 10 windings of the yarn 12. At least two consecutive layers of the three layers 11, 13 and 15 have been wound in accordance with different winding patterns.

The first layer 11 comprises preferably less than 20 windings of the yarn 12. In one embodiment the second layer 13 comprises less than 25 windings of the yarn 12. In another embodiment the third layer 15 comprises less than 35 windings of the yarn 12.

Preferably, the first layer 11 comprises between 7 and 14 windings of the yarn 12. In another preferred embodiment of the filter 10 the second layer 13 comprises between 8 and 14 windings of the yarn 12, and in yet another preferred embodiment the third layer 15 comprises between 14 and 24 windings of the yarn 12.

In order to facilitate a good flow of the fluid through the filter 10 without applying excessive pressure, each of the three layers 11, 13 and 15 comprises, preferably, less than 50 - 70 windings of yarn 12.

One way of providing a particular winding pattern in the illustrated filter 10 is by using a particular winding angle λ. The applicant has found it advantageous if the first layer 11 of yarn 12 has been wound around the outer surface 16 of the tubular core 2 at an angle λ larger than 60 degrees with respect to an axis 14 parallel to the longitudinal extension of the tubular core 2. In another advantageous embodiment of the invention the second layer 13 of yarn 12 has been wound around the outer surface 16 of the tubular core 2 at an angle λ larger than 55 degrees with respect to an axis 14 parallel to the longitudinal extension of the tubular core 2, and in yet another embodiment the third layer 15 of yarn 12 has been wound around the outer surface 16 of the tubular core 2 at an angle λ larger than 50 degrees with respect to an axis 14 parallel to the longitudinal extension of the tubular core 2. Preferably, the angle λ with which the yarn 12 has been wound around the tubular core 2 is different for two consecutive layers 11 and 13 or 13 and 15, in order to facilitate winding patterns that are able to trap particles of different sizes.

In another (not illustrated) embodiment of a filter 10 according to the invention, the filter 10 may comprise additional layers, for example the illustrated layer structure of 3 layers 11, 13 and 15 could be repeated for a suitable number of times.

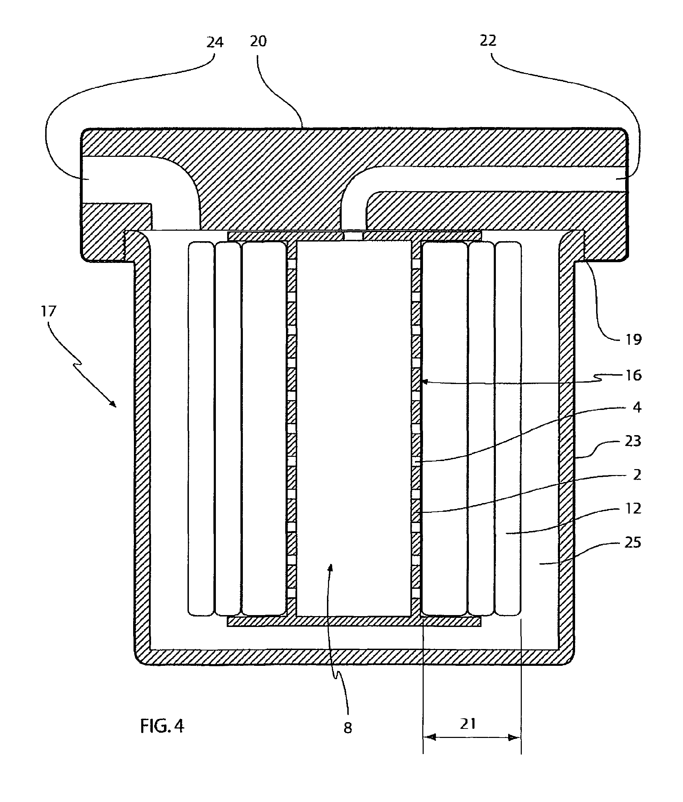

Fig. 4 shows a cross section of a filter 10 installed in a housing 17. The housing 17 further comprises a first opening 22 that is fluidly connected to the hollow interior 8 of the tubular core 2, and a second opening 24 that is fluidly connected to the layers (not explicitly shown) of yarn 12. Preferably the second opening 24 functions as a fluid inlet, and the first opening 22 functions as a fluid outlet. Hereby is achieved a self contained unit that that may be adapted to be mounted in connection with a power transmission system, such as an engine, hydraulics, gears, valves etc. Furthermore, this self contained unit may be used as a bypass filter for providing additional filtering in already existing installations and power transmission systems. The housing 17 is preferably made from metal.

In order to facilitate easy exchange of the filter 10, e g. when it is worn out, without having to change the whole housing 17 as well, the housing 17 may comprise a container 23 and a cap 20 that is releasably attached to the container 23. This releasable attachment could for example be provided by the illustrated threading 19.

In the illustrated embodiment both the first 22 and the second 24 openings are placed in the cap 20. Hereby is achieved an embodiment wherein the filter 10 may be replaced in an easy manner without having to unplug one or both if the first 22 and second 24 openings of the housing 17. The container 23 may for example just be screwed of the cap 20 and the filter 10 replaced.

According to an embodiment of a filter 10 according the longitudinal extension 6 of the yarn 12 covered tubular core 2 is between 5 - 10 times the total radial thickness 21 of the layers as measured from the outer surface 16 of the tubular core 2. The dimensions that are chosen in any particular case may be chosen in dependence of the capacity needed, i.e. how much fluid is needed to be filtered pr. hour. For example a filter 10 having a longitudinal extension 6 between 24 cm and 30 cm will be suitable for filtering up to 250 - 500 l/h (liters/hour), while a filter 10 that has a longitudinal extension 6 between 45 cm and 60 cm will be suitable for filtering up to 1000 - 1500 l/h.

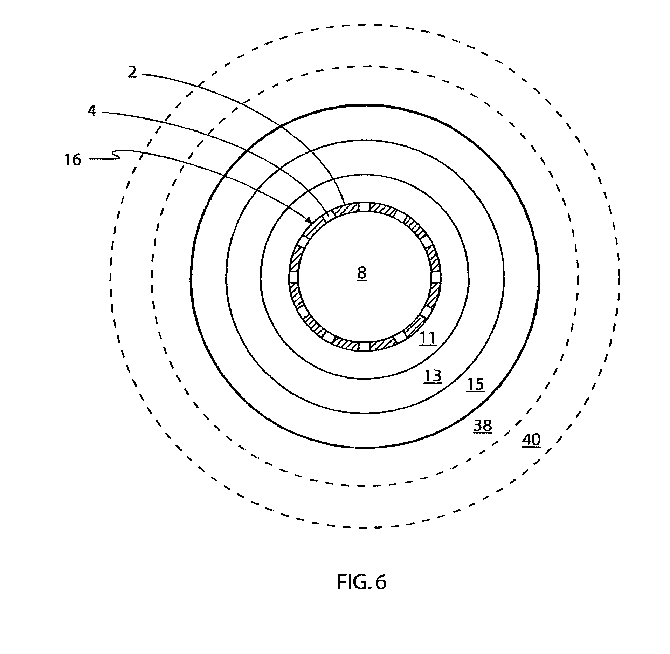

When a fluid, for example a petrochemical fluid such as oil enters the housing 17 through the second opening 24 in the cap 20 of the housing 17 it will flow into the hollow interior 25 of the container 21. The fluid will then flow through the through the layers (not illustrated explicitly) of yarn 12 along the total radial thickness 21 of the yarn 12 and into the hollow interior 8 of the tubular core 2 via the apertures 4. During its flow through the layers (not explicitly illustrated in this figure, but see for example figure 3 and 6) of yarn 12, particles present in the fluid are deposited in the layers of yarn 12. The first opening 22 of the cap 20 of the housing 17 is fluidly connected to the hollow interior 8 of the tubular core 2 via the open end 18 of the tubular core 2. The housing 17 may for example be connected to a distillation chamber known in the art.

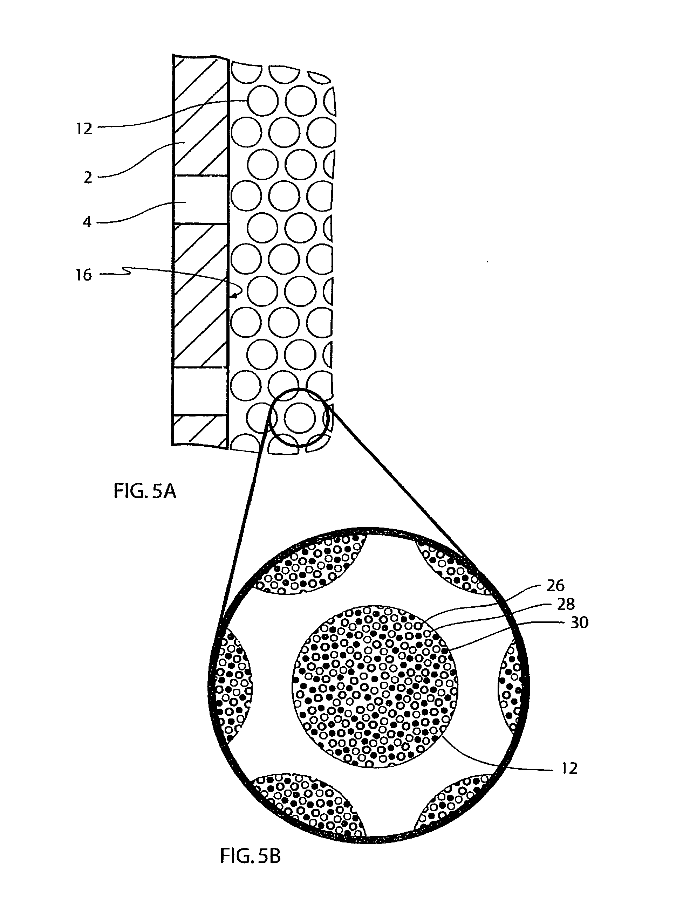

Fig. 5 shows a partial longitudinal cross sectional view of an embodiment of a filter 10 according to the invention. Illustrated is a part of the tubular core 2 having a number of apertures 4. Around the outer surface 16 of the tubular core 2 is wound a yarn 12 in a number of layers (not illustrated), wherein only the first two windings of the first layer is illustrated.

The yarn 12 comprises a number of fibers 26, 28 and 30 (of which only three have been given designation numbers in order to increase the intelligibility of the figure).

Preferably, the yarn 12 comprises a mix of natural and synthetic fibers. For example in the illustrated embodiment the fibers 26 and 30 may be natural, while the fiber 28 may be synthetic. Since natural fibers 26 and 30 are hydrophilic, while synthetic fibers 28 generally are hydrophobic, a filter 10 wherein the yarn 12 is made of a mix of both natural (26 and 30) and synthetic (28) fibers has the additional advantage that in addition to being able to filter particles from the fluid, also water may be absorbed by the yarn 12 and thereby filtered from the fluid without having to heat the filter.

In a preferred embodiment the natural fibers 26 and 30 are chosen from a list of fibers comprising cotton and/or wool or flax and the synthetic fibers (28) are chosen from a list of fibers comprising any of the following materials: acryl, polyester, polyamide, acetate and/or viscose. Cotton and wool are cheap natural fibers that are easy to mix with any or a plurality of the synthetic fibers mentioned above. Thus facilitating an effective, yet cheap yarn 12 for the filter 10.

In one embodiment according to the invention the yarn 12 comprises less than 40% natural fibers. In another embodiment the yarn 12 comprises more than 17% acryl. In yet another embodiment the yarn 12 comprises more than 12% polyester, and in yet even another embodiment the yarn 12 comprises more than 12% flax.

Preferably, the yarn 12 comprises less than 2% polyamide or between 3% and 15% polyamide or between 5% and 9% polyamide.

Alternatively, or in addition to the above, the yarn 12 may comprise more than 1% acetate or between 1% and 10% acetate, or between 1 % and 6% acetate or between 2% and 4% acetate or between 1% and 2,5% acetate

In an alternative embodiment the yarn 12 comprises more than 1% viscose, or between 1% and 10% viscose or between 1% and 5% viscose or between 1% and 3% viscose. Fig. 6 shows the embodiment of a filter 10 as illustrated in Fig. 3 cut along the dashed line A in order to illustrate the layered structure of yarn 12 more clearly. Illustrated is the tubular core 2 with a number of apertures 4 and a hollow interior 8. Around the outer surface 16 of the tubular core 2 is illustrated the first layer 11 of yarn that has been wound around the tubular core 2 in accordance with a particular winding pattern. Also illustrated is the second 13 and third 15 layer of yarn 12. In addition to these layers 11, 13 and 15 additional layers may be provided in alternative embodiments as is illustrated by the layers 38 and 40.

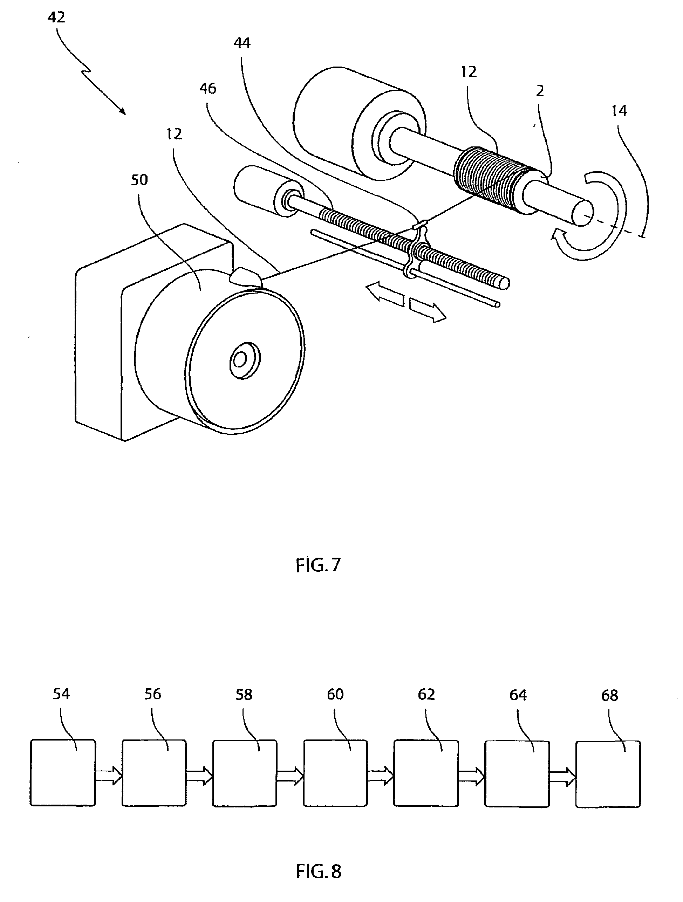

Fig. 7 shows a tubular core 2 that has been placed in a winding machine 42. The tubular core 2 is rotated with respect to the axis 14, while the yarn 12 is fed through a head 44 to the tubular core 2. The rotation of the tubular core may be manually controlled, but is preferably automatically controlled by the winding machine 42 or a computer (not illustrated) controlling the winding machine 42. Meanwhile the head 44 is moved back and forth (as illustrated by the double arrow 48) on the rail 46 parallel to the axis 14 at a controlled rate. By varying the speed of the head 44 along the rail 48 and/or rotation of the tubular core 2 with respect to the axis 14 varying winding patterns may be produced. In particular a layered structure of yarn 12 with a certain number of windings of the yarn 12 and a certain winding pattern for each or some of the layers may be provided for. In the illustrated embodiment the yarn 12 is provided from a yarn supply 50 holding a larger quantity of yarn 12.

In a preferred embodiment of any of the filters 10 illustrated in any of the figures 2 - 7 the yarn 12 has been wound around the outer surface 16 of the core 2 with different winding resistance in at least two of the three layers (11, 13, and 15). Hereby is provided a simple way to vary the density of the yarn 12 in the different layers 11, 13 and 15. This influences the flow of the fluid through the layers and therefore the way the particles are deposited in the different layers. In a particularly preferred embodiment the yarn 12 of the first 11 and third 15 layer has been wound around the outer surface 16 of the core 2 with a winding resistance that is larger than the winding resistance that has been used for the second layer 13. Hereby the fluid under a certain pressure will meet first a harder resistance then a lesser resistance and then again a harder resistance when passing through the filter media (the layers of yarn 12). This also has the effect of first slowing down, then accelerating and then slowing down again of the fluid when passing through the filtration media (layers of yarn 12). By a suitable adjustment of the winding resistance the filter 10 may be designed to be particularly effective in filtering particles of a particular size from the fluid, which means that it can be optimized for a particular use, wherein particles of a certain size are a problem.

The winding resistance may be adjusted by varying the speed at which the yarn 12 is fed through the head 44 relative to the speed of rotation of the tubular core with respect to the axis 14. This adjustment of the winding resistance is preferably automatically controlled by the winding machine 42.

In another embodiment of any of the filters 10 illustrated in any of the figures 2 - 7, the yarn 12 of the first layer 11 (closest to the core 2) has been wound around the outer surface 16 of the core 2 with a winding resistance that is larger than the winding resistance that has been used for the second layer 13, and wherein the yarn 12 of the third layer 15 has been wound around the outer surface 16 of the core 2 with a winding resistance that is larger than the winding resistance that has been used for the second layer 13. Hereby is achieved an embodiment wherein the fluid is slowed down more and more for each layer it passes through during its flow through the filtering media (the layers of yarn 12).

While it has not been illustrated in any of the figures, the outer surface 16 of the tubular core 12 illustrated in any of the figures may also be covered with a fluid permeable sheet that covers the outer surface 16 of the tubular core 2 at least one time. The sheet, thus being placed between the outer surface 16 of the core 2 and the first layer 11 of yarn 12. The sheet is preferably a piece of textile, preferably a tightly woven textile.

In the following more specific examples of filters 10 according to an aspect of the invention are given, wherein

### EXAMPLE 1

In a preferred embodiment of a filter 10 as illustrated in any of the figures 2 - 6, the first layer 11 comprises 10 - 14 windings of the yarn 12 that has been wound onto the tubular core 2 at an angle A of 72 degrees (both ways), the second layer 13 comprises 12 - 14 windings of the yarn 12 that has been wound onto the tubular core 2 at an angle A of 68 degrees (both ways) and wherein the third layer 15 comprises 21 - 24 windings of the yarn 12 that has been wound onto the tubular core 2 at the angle A of 69 degrees. Specifically in the above mentioned preferred embodiment of the filter 10, the first layer 11 may comprise 12 windings of the yarn 12, the second layer 13 may comprise 14 windings of the yarn 12 and the third layer 15 may comprise 23 windings of the yarn 12. Investigations have shown that a filter 10 according to this specific example 1 is particularly well suited for filtering particles having a diameter or average particle size of 0.5 µm - 50 µm from a petrochemical fluid such as oil, e.g. engine oil. A filter 10 according to this example 1 with a longitudinal length of 45 - 60 cm has the capacity of filtering up to 1000 L/h - 1500 Uh of fluid.

### EXAMPLE 2

In another preferred embodiment of a filter 10 as illustrated in any of the figures 2 - 6, the yarn 12 comprises a mixture of fibers made from: 5% - 15% cotton, 29% - 35% acryl, 15% - 16% flax, 32% - 37% polyester, 5% - 6% polyamide and 2-5% - 4% acetate. For example 10% cotton, 32% acryl, 16% flax, 34% polyester, 5% polyamide and 3% acetate.

### EXAMPLE 3

In yet another preferred embodiment of a filter 10 as illustrated in any of the figures 2 - 6, the layered structure of example 1 is used in combination with the composition of the yarn 12 used in example 2. Investigations have shown that a filter 10 according to this specific example 3 is even better suited for filtering particles having a diameter or average particle size of 0.5 µm - 50 µm from a petrochemical fluid such as oil, e.g. engine oil. A filter 10 according to this example 3 with a longitudinal length of 45 - 60 cm has the capacity of filtering up to 1000 L/h - 1500 Uh of fluid.

### EXAMPLE 4

In a preferred embodiment of a filter 10 as illustrated in any of the figures 2 - 6, the first layer 11 comprises more than 6 windings of the yarn 12 that has been wound onto the tubular core 2 at an angle A of 72 degrees (both ways), the second layer 13 comprises more than 7 windings of the yarn 12 that has been wound onto the tubular core 2 at an angle λ of 65 degrees (both ways) and wherein the third layer 15 comprises more than 13 windings of the yarn 12 that has been wound onto the tubular core 2 at the angle A of 68 degrees. Specifically in the above mentioned preferred embodiment of the filter 10, the first layer 11 may comprise 7 windings of the yarn 12, the second layer 13 may comprise 8 windings of the yarn 12 and the third layer 15 may comprise 14 windings of the yarn 12. Investigations have shown that a filter 10 according to this specific example 4 is particularly well suited for filtering particles having a diameter or average particle size of 0.5 µm - 40 µm from a petrochemical fluid such as oil, e.g. engine oil. A filter 10 according to this example 4 with a longitudinal length of 24 - 30 cm has the capacity of filtering up to 250 L/h - 500 L/h fluid.

### EXAMPLE 5

In another preferred embodiment of a filter 10 as illustrated in any of the figures 2 - 6, the yarn 12 comprises a mixture of fibers made from: 29% - 37% cotton, 17% - 25% acryl, 12% - 13% flax, 15% - 30% polyester, 3% - 4% polyamide, 1% - 2% acetate and 1% - 2% viscose. For example 35% cotton, 22% acryl, 12% flax, 25% polyester, 3% polyamide, 1 % acetate and 2% viscose.

### EXAMPLE 6

In yet another preferred embodiment of a filter 10 as illustrated in any of the figures 2 - 6, the layered structure of example 4 is used in combination with the composition of the yarn 12 used in example 5. Investigations have shown that a filter 10 according to this specific example 6 is even better suited for filtering particles having a diameter or average particle size of 0.5 µm - 40 µm from a petrochemical fluid such as oil, e.g. engine oil. A filter 10 according to this example 3 with a longitudinal length of 24 - 30 cm has the capacity of filtering up to 250 Uh - 500 L/h of fluid.

Fig. 8 shows a flow diagram of a method of manufacturing a filter 10 illustrated in any of the figures 2 - 8, where the method comprises the steps of
- mounting the tubular core 2 with a plurality of apertures 4 and a hollow interior 8 in a winding machine 42, as indicated by the block 54.
- rotating the core 2 at a rate controlled by the winding machine 42, as indicated by the block 56. This step 56 could for example be done manually or at a pre-programmed rate,
- feeding a yarn 12 to the core 2 through a head 44 in such a way that it winds onto an outer surface 16 of the core 2, as indicated by the block 58.
- moving the head 44 forward and backwards along the longitudinal axis 14 of the core 2, as indicated by the block 60.
- winding a first layer 11 of yarn 12 onto the core 2 comprising at least 5 windings of yarn 12, as indicated by the block 62,
- winding a second layer 13 of yarn 12 onto the core 2 comprising at least 6 windings of the yarn 12, as indicated by the block 64, and
- winding a third layer 15 of yarn onto the core 2 comprising at least 10 windings of yarn 12, as indicated by the block 68. The speed of rotation of the core 2 and/or speed of movement of the head 44 is varied between each layer 11, 13 and 15, i.e. between each of the steps 62, 64 and 68.

The method illustrated by the flow diagram in Fig. 8 may further comprise the step of varying the winding resistance of the yarn 12 by varying the speed at which the yarn 12 is feed through the head 44 relative to the speed of rotation of the tubular core 2 with respect to the axis 14.

### LIST OF REFERENCES

In the following is given a list of reference numbers that are used in the detailed description of the invention.
- 2: tubular core,
- 4: apertures in the tubular core,
- 6: longitudinal extension of the tubular core,
- 8: hollow interior of the tubular core,
- 10: filter,
- 11: first layer of yarn,
- 12: yarn,
- 13: second layer of the yarn,
- 14: longitudinal axis of the tubular core,
- 15: third layer of the yarn,
- 16: outer surface of the tubular core,
- 17: housing,
- 18: open end of tubular core,
- 19: threading,
- 20: cap,
- 21: total radial thickness of the yarn,
- 22: first opening of the housing,
- 23: container,
- 24: second opening of the housing,
- 25: hollow interior of the container,
- 26: natural fiber,
- 28: synthetic fiber,
- 30: natural fiber,
- 38: additional optional layer of yarn,
- 40: additional optional layer of yarn,
- 42: winding machine,
- 44: head,
- 46: rail,
- 50: yarn supply, and
- 54 - 68: method steps,

## Claims

1. A filter comprising a tubular core with a plurality of apertures and a hollow interior, said core having an open end for fluid communication with the hollow interior, a length of yarn wound in a series of at least three layers around an outer surface of the core, wherein the first layer closest to the surface of the core comprises at least 5 windings of the yarn, the second layer comprises at least 6 windings of the yarn and the third layer comprises at least 10 windings of the yarn and wherein at least two consecutive layers have been wound in accordance with different winding patterns.

2. A filter according to claim 1, wherein each of the three layers have been wound in accordance with a winding patterns different from the winding pattern of the other layers.

3. A filter according to claim 1 or 2, wherein the first layer comprises less than 20 windings of the yarn and/or the second layer comprises less than 25 windings of the yarn and/or the third layer comprises less than 35 windings of the yarn.

4. A filter according to any of the preceding claims, wherein the first layer comprises between 7 and 14 windings of the yarn and/or the second layer comprises between 8 and 14 windings of the yarn and/or the third layer comprises between 14 and 24 windings of the yarn.

5. A filter according to any of the preceding claims, wherein the first layer of yarn has been wound around the outer surface of the core at an angle larger than 60 degrees with respect to an axis parallel to the tubular core and/or the second layer of yarn has been wound around the outer surface of the core at an angle larger than 55 degrees with respect to an axis parallel to the tubular core and/or the third layer of yarn has been wound around the outer surface of the core at an angle larger than 50 degrees with respect to an axis parallel to the tubular core.

6. A filter according to any of the preceding claims, wherein the yarn comprises a mix of natural and synthetic fibers.

7. A filter according to claim 6 wherein the natural fibers are chosen from a list of fibers comprising cotton and/or wool or flax and wherein the synthetic fibers are chosen from a list of fibers comprising any of the following materials: acryl, polyester polyamide, acetate and/or viscose.

8. A filter according to claim 6 or 7, wherein the yarn comprises less than 40% natural fibers.

9. A filter according to claim 6, 7 or 8, wherein the yarn comprises more than 17% acryl and/or more than 12% polyester and/or more than 12% flax.

10. A filter according to any of the preceding claims, wherein the yarn has been wound around the outer surface of the core with different winding resistance in at least two of the three layers.

11. A filter according to any of the claims 1 - 10, wherein the yarn of the first and third layer has been wound around the outer surface of the core with a winding resistance that is larger than the winding resistance that has been used for the second layer.

12. A filter according to any of the preceding claims, further comprising a housing that completely encloses the tubular core and yarn, and wherein the housing further comprises a first opening that is fluidly connected to the hollow interior of the tubular core and a second opening that is fluidly connected to the layers of yarn.

13. A filter according to claim 12, wherein the housing comprises a container and a cap that is, preferably releasably, attached to the container.

14. A filter according to any of the preceding claims wherein longitudinal extension of the yarn covered core is between 5 - 10 times the total radial thickness of the layers.

15. A method of filtering a fluid comprising the step of leading the fluid through a filter comprising at least three layers of yarn that are wound around an outer surface of a tubular core into an hollow interior of the core, wherein the first layer closest to the surface of the core comprises at least 5 windings of the yarn, the second layer comprises at least 6 windings of the yarn, and the third layer comprises at least 10 windings of the yarn, and wherein at least two of the at least three layers have been wound in accordance with different winding patterns.

## Patentansprüche

1. Filter umfassend einen rohrförmigen Kern mit einer Vielzahl von Öffnungen und einem hohlen Inneren, wobei der Kern ein offenes Ende zur Flüssigkeitsverbindung mit dem hohlen Inneren aufweist, eine Länge von in einer Reihe von mindestens drei Schichten um eine äußere Oberfläche des Kerns gewickeltem Garn, wobei die der Oberfläche des Kerns am nächsten liegende erste Schicht mindestens 5 Wicklungen des Garns umfasst, die zweite Schicht mindestens 6 Wicklungen des Garns umfasst, und die dritte Schicht mindestens 10 Wicklungen des Garns umfasst, und wobei mindestens zwei aufeinanderfolgende Schichten in Übereinstimmung mit verschiedenen Wickelmustern gewickelt worden sind.

2. Filter nach Anspruch 1, wobei jede der drei Schichten in Übereinstimmung mit einem Wickelmuster gewickelt worden ist, das sich von den Wickelmustern der anderen Schichten unterscheidet.

3. Filter nach Anspruch 1 oder 2, wobei die erste Schicht weniger als 20 Wicklungen des Garns umfasst, und/oder die zweite Schicht weniger als 25 Wicklungen des Garns umfasst, und/oder die dritte Schicht weniger als 35 Wicklungen des Garns umfasst.

4. Filter nach einem der vorherstehenden Ansprüche, wobei die erste Schicht zwischen 7 und 14 Wicklungen des Garns umfasst, und/oder die zweite Schicht zwischen 8 und 14 Wicklungen des Garns umfasst, und/oder die dritte Schicht zwischen 14 und 24 Wicklungen des Garns umfasst.

5. Filter nach einem der vorherstehenden Ansprüche, wobei die erste Schicht von Garn um die äußere Oberfläche des Kerns in einem Winkel von mehr als 60 Grad bezüglich einer zu dem rohrförmigen Kern parallelen Achse gewickelt worden ist, und/oder die zweite Schicht von Garn um die äußere Oberfläche des Kerns in einem Winkel von mehr als 55 Grad bezüglich einer zu dem rohrförmigen Kern parallelen Achse gewickelt worden ist, und/oder die dritte Schicht von Garn um die äußere Oberfläche des Kerns in einem Winkel von mehr als 50 Grad bezüglich einer zu dem rohrförmigen Kern parallelen Achse gewickelt worden ist.

6. Filter nach einem der vorherstehenden Ansprüche, wobei das Garn ein Gemisch von natürlichen und synthetischen Fasern umfasst.

7. Filter nach Anspruch 6, wobei die natürlichen Fasern aus einer Liste von Fasern umfassend Baumwolle und/oder Wolle oder Flachs ausgewählt sind, und wobei die synthetischen Fasern aus einer Liste von Fasern umfassend eines der folgenden Werkstoffe: Acryl, Polyester, Polyamid, Acetat und/oder Viskose ausgewählt sind.

8. Filter nach Anspruch 6 oder 7, wobei das Garn weniger als 40% natürliche Fasern umfasst.

9. Filter nach Anspruch 6, 7 oder 8, wobei das Garn mehr als 17% Acryl und/oder mehr als 12% Polyester und/oder mehr als 12% Flachs umfasst.

10. Filter nach einem der vorherstehenden Ansprüche, wobei das Garn um die äußere Oberfläche des Kerns mit verschiedenem Wickelwiderstand in mindestens zwei der drei Schichten gewickelt worden ist.

11. Filter nach einem der Ansprüche 1 - 10, wobei das Garn der ersten und dritten Schicht um die äußere Oberfläche des Kerns mit einem Wickelwiderstand gewickelt worden ist, der grösser als der Wickelwiderstand ist, der für die zweite Schicht angewendet worden ist.

12. Filter nach einem der vorherstehenden Ansprüche, ferner umfassend ein Gehäuse, das den rohrförmigen Kern und das Garn völlig umschließt, und wobei das Gehäuse ferner eine erste Öffnung umfasst, die mit dem hohlen Inneren des rohrförmigen Kerns in Flüssigkeitsverbindung steht, und eine zweite Öffnung, die mit den Schichten von Garn in Flüssigkeitsverbindung steht.

13. Filter nach Anspruch 12, wobei das Gehäuse einen Behälter und eine Kappe umfasst, die, bevorzugt lösbar, an dem Behälter befestigt ist.

14. Filter nach einem der vorherstehenden Ansprüche, wobei die Längserstreckung des mit Garn umhüllten Kerns zwischen das 5 - 10-fache der totalen radialen Dicke der Schichten beträgt.

15. Verfahren zum Filtrieren einer Flüssigkeit umfassend den Schritt des Leitens der Flüssigkeit durch einen Filter umfassend mindestens drei Schichten von Garn, die um eine äußere Oberfläche eines rohrförmigen Kerns in ein hohles Inneres des Kerns gewickelt sind, wobei die der Oberfläche des Kerns am nächsten liegende erste Schicht mindestens 5 Wicklungen des Garns umfasst, die zweite Schicht mindestens 6 Wicklungen des Garns umfasst, und die dritte Schicht mindestens 10 Wicklungen des Garns umfasst, und wobei mindestens zwei der mindestens drei Schichten in Übereinstimmung mit verschiedenen Wickelmustern gewickelt worden sind.

## Revendications

1. Filtre comprenant un noyau tubulaire avec une pluralité d'ouvertures et un intérieur creux, ledit noyau ayant une extrémité ouverte pour la communication fluide avec l'intérieur creux, une longueur de fil enroulé en une série d'au moins trois couches autour d'une surface extérieure du noyau, dans lequel la première couche étant la plus proche de la surface du noyau comprend au moins 5 enroulements du fil, la deuxième couche comprend au moins 6 enroulements du fil et la troisième couche comprend au moins 10 enroulements du fil, et dans lequel au moins deux couches consécutives ont été enroulées conformément aux différents modèles d'enroulement.

2. Filtre selon la revendication 1, dans lequel chacun desdites trois couches ont été enroulées conformément à un modèle d'enroulement différant du modèle d'enroulement des autres couches.

3. Filtre selon l'une des revendications 1 ou 2, dans lequel la première couche comprend moins de 20 enroulements du fil et/ou la deuxième couche comprend moins de 25 enroulements du fil et/ou la troisième couche comprend moins de 35 enroulements du fil.

4. Filtre selon l'une quelconque des revendications précédentes, dans lequel la première couche comprend entre 7 et 14 enroulements du fil et/ou la deuxième couche comprend entre 8 et 14 enroulements du fil et/ou la troisième couche comprend entre 14 et 24 enroulements du fil.

5. Filtre selon l'une quelconque des revendications précédentes, dans lequel la première couche de fil a été enroulée autour de la surface extérieure du noyau à un angle supérieur à 60 degrés en ce qui concerne un axe parallèle au noyau tubulaire et/ou la deuxième couche de fil a été enroulée autour de la surface extérieure du noyau à un angle supérieur à 55 degrés en ce qui concerne un axe parallèle au noyau tubulaire et/ou une troisième couche de fil a été enroulée autour de la surface extérieure du noyau à un angle supérieur à 50 degrés en ce qui concerne un axe parallèle au noyau tubulaire.

6. Filtre selon l'une quelconque des revendications précédentes, dans lequel le fil comprend un mélange de fibres naturelles et synthétiques.

7. Filtre selon la revendication 6, dans lequel les fibres naturelles sont choisies à partir d'une liste de fibres comprenant du coton et/ou de la laine ou du lin et dans lequel les fibres synthétiques sont choisies à partir d'une liste de fibres comprenant l'un quelconques des matériaux suivants: de l'acrylique, du polyester, du polyamide, de l'acétate et/ou de la viscose.

8. Filtre selon l'une des revendications 6 ou 7, dans lequel le fil comprend moins de 40% de fibres naturelles.

9. Filtre selon l'une des revendications 6, 7 ou 8, dans lequel le fil comprend plus de 17% d'acrylique et/ou plus de 12% de polyester et/ou plus de 12% de lin.

10. Filtre selon l'une quelconque des revendications précédentes, dans lequel le fil a été enroulé autour de la surface extérieure du noyau avec une résistance d'enroulement différente dans au moins deux parmi les trois couches.

11. Filtre selon l'une quelconque des revendications 1 à 10, dans lequel le fil de la première couche et la troisième couche a été enroulé autour de la surface extérieure du noyau avec une résistance d'enroulement qui est supérieure à la résistance d'enroulement qui a été utilisée pour la deuxième couche.

12. Filtre selon l'une quelconque des revendications précédentes comprenant en outre un logement qui enveloppe complètement le noyau tubulaire et le fil, et dans lequel le logement comprend en outre une première ouverture qui est connectée de manière fluide à l'intérieur creux du noyau tubulaire et une deuxième ouverture qui est connectée de manière fluide aux couches de fil.

13. Filtre selon la revendication 12, dans lequel le logement comprend un récipient et un capuchon qui est attaché au récipient, de préférence de manière amovible.

14. Filtre selon l'une quelconque des revendications précédentes, dans lequel l'extension longitudinale du noyau couvert de fil fait entre 5 à 10 fois l'épaisseur radiale totale des couches.

15. Procédé de filtrage d'un fluide comprenant l'étape consistant à faire passer le fluide à travers un filtre comprenant au moins trois couches de fil qui sont enroulées autour d'une surface extérieure d'un noyau tubulaire jusque dans un intérieur creux du noyau, dans lequel la première couche étant le plus proche de la surface du noyau comprend au moins 5 enroulements du fil, la deuxième couche comprend au moins 6 enroulements du fil, et la troisième couche comprend au moins 10 enroulements du fil, et dans lequel au moins deux parmi les, au moins, trois couches ont été enroulées conformément à des modèles d'enroulement différents.
